# EUROPÄISCHE PATENTSCHRIFT

(11) **EP 4 094 592 B1**
(45) Veröffentlichungstag und Bekanntmachung des Hinweises auf die Patenterteilung: **02.07.2025**
(21) Anmeldenummer: 22171702.8
(22) Anmeldetag: 05.05.2022
(51) Int. Cl.: A23N 7/00, B26D 3/26, A47J 25/00

(54) **SCHNEIDEVORRICHTUNG UND SCHÄL- UND ENTKERNUNGSVORRICHTUNG FÜR EINE ANANASFRUCHT**
CUTTING DEVICE AND PEELING AND CORING DEVICE FOR A PINEAPPLE
DISPOSITIF DE COUPE ET DISPOSITIF POUR ÉPLUCHER ET RETIRER LE CYLINDRE CENTRAL D'UN ANANAS

(30) Priorität: 27.05.2021 DE 202021102887 U
(43) Veröffentlichungstag der Anmeldung: 30.11.2022
(73) Patentinhaber: Hepro GmbH, 33378 Rheda-Wiedenbrück (DE)
(72) Erfinder: Protte, Christoph, 33129 Delbrück (DE)
(74) Vertreter: DTS Patent- und Rechtsanwälte PartmbB

(56) Entgegenhaltungen:
- DE-U1- 8 530 955
- US-A- 3 540 503
- US-A- 4 497 245
- US-A- 4 718 333
- US-A- 5 463 943

## Beschreibung

Die vorliegende Erfindung betrifft eine Schneidevorrichtung für eine Frucht nach dem Oberbegriff des Anspruchs 1 und eine Schäl- und Entkernungsvorrichtung nach dem Oberbegriff des Anspruchs 11.

Aus der DE 85 30 955.9 U1 ist ein Ananasschneider bekannt, der einen zylindrischen Schneidkörper mit einem an seinem unteren Ende umlaufenden Schneidrand und eine im Inneren des zylindrischen Körpers in vertikaler Richtung verschiebbar angebrachte Vortriebs- und Druckplatte aufweist. Weiterhin offenbart diese Druckschrift am oberen Teil des zylindrischen Schneidkörpers ein Ausschiebeteil, das mit der Druckplatte verbunden ist. Eine vergleichbare Schneide- und Schälvorrichtung zum verzehrfertigen Aufbereiten einer Ananasfrucht offenbart die EP 0 301 796 A2, bei welcher ein manuell bedienbarer, linearer Antrieb für eine ring- oder kreisförmige Schneide vorgesehen ist. Die DE 20 2021 100 256 U1 zeigt eine vergleichbare, teilautomatisierte Vorrichtung zum Schälen und Entkernen einer Ananasfrucht.

Aus der US 5,463,943 A ist eine Vorrichtung zum Schneiden und Entkernen von Früchten bekannt. Die US US 4,497,245 A beschreibt einen Ananasschneider. Nachteilig an den Lösungen im Stand der Technik ist die Hygiene und der aufwändige händische Reinigungsaufwand, weil die langen und zum Teil sehr stabilen Fasern der Ananasfrucht regelmäßig von allen Oberflächen entfernt werden müssen, was zum Teil nicht mittels einfachem Abschwemmen möglich ist.

Es ist die Aufgabe der vorliegenden Erfindung, eine verbesserte Schneid- und Schälvorrichtung vorzuschlagen, die leicht zu reinigen und zu bedienen ist.

Diese Aufgabe wird erfindungsgemäß gelöst durch die Merkmale des Anspruchs 1. Vorteilhafte Ausgestaltungen sind in den Unteransprüchen angegeben.

Danach wird die Aufgabe durch eine Schneidevorrichtung nach den kennzeichnenden Merkmalen des Anspruchs 1 gelöst, sowie durch eine Schäl- und Entkernungsvorrichtung nach den kennzeichnenden Merkmalen des Anspruchs 11. Vorteilhafte Ausführungsformen sind in den jeweiligen, zugehörigen Unteransprüchen ausgeführt.

Diese erfindungsgemäße Schneidevorrichtung zum Schälen und zur Kernentfernung einer Ananasfrucht, wobei vorliegend Ananas und Ananasfrucht synonym verwendet werden, umfasst ein Kopfelement, ein ring- oder kranzförmiges Schneidelement mit einem ein- oder mehrteiligen Schneidkranz. Weiterhin ist mindestens eine das Kopfelement und das Schneidelement verbindende Verbindungsstruktur oder Tragelement vorgesehen. Das Kopfelement umfasst mindestens ein Befestigungsmittel, womit das Kopfelement an einem Antrieb oder einer Vortriebseinheit befestigt werden kann. Am Kopfelement ist ein zentraler, lösbarer Schneidzylinder angeordnet, welcher von der Verbindungsstruktur oder dem Tragelement und dem Schneidelement konzentrisch umschlossen wird. Dabei weist das Schneidelement einen Abschlussrand oder -kranz auf, bei dem das Aufnahme- und Verbindungselement angeordnet ist.

Der Kern der Idee besteht darin, dass das Kopfelement und das Schneidelement jeweils mindestens ein Aufnahme- und Verbindungselement umfassen, an oder mittels welchem die Verbindungsstruktur lösbar befestigt ist, und wobei an der Verbindungsstruktur das zugehörige, komplementäre Gegenaufnahmeelement zum Aufnahme- und Verbindungselement angeordnet oder angeformt ist.

Bei einer Ausführungsform ist das Aufnahme- und Verbindungselement ein Schraubelement oder ist als Bajonettverschluss ausgebildet. Hierbei soll unter Schraubelement jegliche Schrauben-/Mutter-Kombination zu verstehen sein, wobei beispielsweise
- in dem Kopfelement und/oder dem Schneidelement ein integriertes Muttergewinde eingelegt oder ausgebildet ist und dass die Verbindungsstruktur abschnittsweise ein Außengewinde aufweist,
- die Verbindungsstruktur abschnittsweise hohl ausgeführt ist und dort ein Innengewinde ausgebildet ist, in welches eine in dem Kopf- oder Schneidelement gelagerte Schraube aufgenommen und kraftschlüssig verbunden werden kann und/oder
- an der Verbindungsstruktur in sonstiger Weise, insbesondere ein Muttergewinde, angebracht sind, in die eine in dem Kopf- oder Schneidelement gelagerte Schraube eingebracht und verspannt werden kann.

Bei einer alternativen Ausführungsform ist vorgesehen, dass das mindestens eine Aufnahme- und Verbindungselement als eine Schwenk- oder Drehlagerstelle ausgebildet ist. Diese Ausführungsform hat den Vorteil, dass große, leicht zu reinigende Strukturen insbesondere auf der Seite des stärker verschmutzenden Schneidelementes vorgesehen werden können, die weiterhin händisch bedient werden können, ohne Nutzung eines Werkzeuges.

Bei einer vorteilhaften Ausführungsform ist die Verbindungsstruktur als eine Gruppe von mindestens zwei parallelen Stäben ausgebildet, idealerweise besteht die Verbindungsstruktur aus drei oder vier Stäben. Mit der Gruppe von Stäben als Verbindungsstruktur wird die verschmutzende Oberfläche minimiert und eine hervorragende Zugänglichkeit und damit Möglichkeit zur Reinigung geschaffen.

Hierbei besteht bei der Stabstruktur eine vorteilhafte Ausführungsform darin, dass die im eingebauten Zustand parallelen Stäbe an mindestens einem Stabende ein Gewinde aufweisen, das als Außengewinde oder als Innen- oder Muttergewinde ausgebildet sein kann. Wie vorstehend schon ausgeführt, weisen das Kopfelement und/oder das Schneidelement entsprechende Gegengewinde auf. Hierbei können die beiden jeweiligen Stabenden als unterschiedliche Gewindetypen ausgebildet sein.

Eine weiter verbesserte Ausführungsform besteht darin, dass das Schneidelement einen unteren Schneidkranz mit einem ersten Schneidkranzradius und einen oberen Abschlussrand oder -kranz mit einem äußeren zweiten Kranzradius umfasst, wobei der erste Schneidkranzradius kleiner ist als der zweite Kranzradius. Durch die unterschiedlichen Kranzradien veranlasste Spreizung, wird die abgeschnittene Ananasschale nach außen gedrückt, was das Schneiden erleichtert und verhindert, dass abgeschnittene Ananasschale an dem Ananaskern, der weiterverarbeitet oder verpackt werden soll, anhaftet.
Mit Blick auf die Stärke der Spreizung ist es vorteilhaft, wenn der äußere Kranzradius um einen Faktor von 1,10 bis 1,4 größer als der Schneidkranzradius ist, idealerweise um einen Faktor von 1,15 bis 1,25 größer ist.

Vorteilhafterweise weist das Schneidelement zwischen dem Schneidkranz und dem Abschlusskranz eine ein- oder mehrteilige umlaufende, konische Spreizfläche auf. Diese kann eine glatte, durchgängige Fläche sein oder auch mindestens abschnittsweise wellen- oder stegartige Erhebungen aufweisen, die in Schneidrichtung verlaufen. Hierdurch wird vorteilhafterweise die Anhaftung der Ananasschale an dem Schneidelement bzw. der Spreizfläche vermindert und die erforderliche Vortriebskraft zum Schneiden vermindert. Die Spreizfläche selbst weist hierbei eine Breite von 2 bis 6 cm auf, idealerweise beträgt die Breite 3,5 bis 4,5 cm. Insbesondere die Breite von 2 cm ist nicht sinnvoll zu unterschreiten, weil sonst die flexiblen Ananasschalen nicht mehr sicher von dem Kern weg nach außen geführt werden.

Bei einer vorteilhaften Ausführungsform weist der obere Abschlusskranz des Schneidelementes ein nach innen kragendes ein- oder mehrteiliges Ringelement auf, wobei der innere, freie Radius des Ringelements gleich oder größer ist als der Schneidkranzradius. Insbesondere sollte er geringfügig größer sein, damit der Ananaskern ohne Kollision sicher an dem inneren, freien Radius beim Schneidvorgang vorbeigeführt werden kann.

Von der Erfindung ist auch eine Schäl- und Entkernungsvorrichtung für eine Ananasfrucht umfasst. Diese weist mindestens eine Halte- und Tragstruktur, eine Halte- und Positionierungseinheit für eine Ananasfrucht und mindestens eine dieser gegenüber angeordnete oder anordbare Vortriebseinheit, an der eine Schneidevorrichtung gehalten und geführt ist. Durch die Vortriebseinheit ist die Schneidevorrichtung von einer Anfangs- oder Ruhelage in eine End- oder Arbeitslage verfahrbar. Der Kern besteht hierbei darin, dass die Schneidevorrichtung nach einem der vorstehend genannten und ausgeführten Ausführungsvarianten ausgebildet ist.

Ein verbesserte Aufführungsform besteht darin, dass die Vortriebseinheit eine lineare Vortriebseinheit ist, insbesondere eine streng lineare Vortriebseinheit, bei welcher die Schneidevorrichtung nicht in Rotation oder Drehung versetzt wird. Dieser Linearantrieb kann elektrisch, hydraulisch oder pneumatisch erfolgen, wobei auch eine mechanische, händische Antriebsart vorgesehen werden kann.

Bei einer weiteren Ausführungsvariante ist vorgesehen, dass mindestens ein stationärer Ausstoßstempel vorhanden ist, der in seiner Längserstreckung parallel oder weitestgehend parallel zur Vortriebsrichtung der Vortriebseinheit ausgerichtet ist und in der Anfangs- oder Ruhelage der Schneidevorrichtung durch eine oder mehrere Öffnungen im Kopfelement in Richtung des Schneidelements beziehungsweise des Schneidkranzes ragt. Insbesondere ist es vorteilhaft, wenn der Ausstoßstempel in der Anfangs- oder Ruhelage sich in seiner Längserstreckung bis zum Schneidelement und idealerweise bis zum Schneidkranz erstreckt. Dies hat den Vorteil, dass die zu verwertenden Teile der Ananas sicher von dem Schneidkranz abgestoßen werden.

Eine weiter verbesserte Ausführungsform der Schäl- und Entkernungsvorrichtung sieht vor, dass ein zentraler, mittiger Ausstoßstempel vorgesehen ist, der Anfangs- oder Ruhelage der Schneidevorrichtung von einem zentralen Schneidzylinder konzentrisch umschlossen wird. Der zentrale Schneidzylinder dient dazu, den zentralen, häufig etwas holzigen Ananaskern mit einem Durchmesser von ca. 2 cm bis 4 cm in der Mitte der Ananasfrucht herauszuschneiden.

Weitere Einzelheiten und Vorteile der Erfindung sollen nun anhand eines in den Zeichnungen dargestellten Ausführungsbeispiels näher erläutert werden.

Es zeigen:
- Fig. 1a), b): in perspektivischer Darstellung die Schneidevorrichtung als Explosionszeichnung (Fig. 1a)) und im zusammengefügten Zustand (Fig. 1b),
- Fig. 2: einen schematischen Aufbau der Schäl- und Entkernungsvorrichtung
- Fig. 3a), b): zwei Ausführungsformen der Schneidevorrichtung in einer vertikalen Schnittdarstellung und
- Fig. 4: eine weitere Ausführungsform des Schneidelements in einer vertikalen Schnittdarstellung.

Bei den nachfolgenden Ausführungsbeispielen sind Bezugszeichen durchgängig für alle Figuren identisch verwendet und werden daher nicht immer textlich erneut erwähnt. Weiterhin werden zur Beschreibung Orientierungsangaben wie "oben", "unten", "geneigt zur Vertikalen" etc. genannt. Diese sind nicht einschränkend zu verstehen und folgen der dargestellten Anordnung. Die Schneidevorrichtung 1 kann in Abhängigkeit von der Orientierung einer zu schneidenden Ananas und oder einer zugehörigen Vortriebseinheit 23, in jeder Lage oder Ausrichtung angeordnet und betrieben werden, so dass vorgenannte Angaben bei unterschiedlicher Ausrichtung analog zu verstehen sind. Die vertikale Anordnung stellt mit Blick auf einen hygienischen Betrieb allerdings die vorteilhafteste Aufführungsform dar, weil hierbei die geringste Benetzung von Bauteilen mit Fruchtsaft erfolgt.

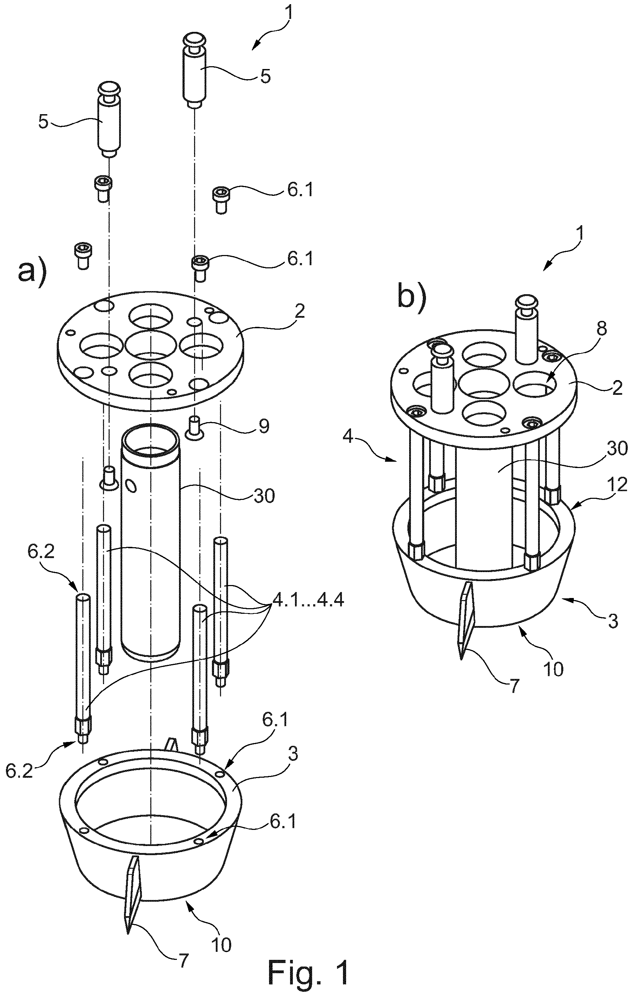

In den Darstellungen der Figur 1 ist die Schneidevorrichtung 1 gezeigt, die ein oberes Kopfelement 2, ein unteres Schneidelement 3 und eine dazwischen angeordnete Verbindungsstruktur 4 aufweist. Die Verbindungsstruktur 4 ist in Form von vier Stäben 4.1-4.4 gebildet. Jeder Stab 4.1-4.4 weist an seinem dem Kopfelement 2 gegenüberliegenden Ende ein Innengewinde auf, welches das Gegenaufnahmeelement 6.2 zu dem im Kopfelement 2 angeordneten und gelagerten Aufnahme- und Verbindungselement 6.1 darstellt. Diese vier Aufnahme- und Verbindungselemente 6.1 sind metrische Schrauben, die an entsprechenden Schraubplätzen in dem Kopfelement 2 eingelegt und verspannt werden. An ihrem unteren Ende weisen die Stäbe 4.1-4.4 als Gegenaufnahmeelement 6.2 jeweils ein Außengewinde auf, welche jeweils in einem Muttergewinde im Abschlussrand oder -kranz 12 verschraubt werden.

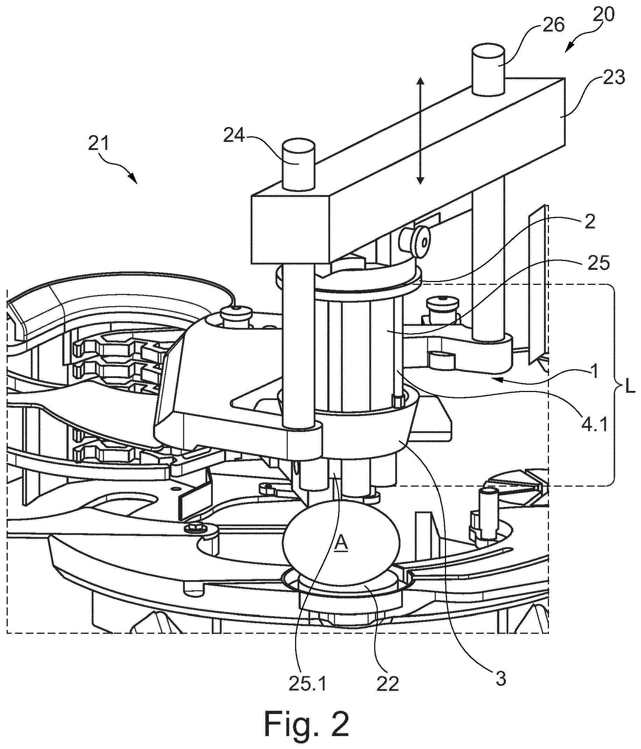

Die in dem Kopfelement 2 mittels der Schrauben 9 befestigten Befestigungsbolzen 5 kann die gesamte Schneidevorrichtung 1 an einer Vortriebseinheit 23 (Figur 2) über eine Schnellkupplung befestigt werden.
Das Kopfelement 2 weist in dem gezeigten Ausführungsbeispiel fünf Öffnungen 8 auf, durch welche nicht dargestellte Ausstoßstempel 25 geführt werden können, wie in Figur 2 gezeigt. Die zentrale, mittige Öffnung führt in einen zentralen Schneidzylinder 30, mit welchem der mittige Kern einer Ananas herausgeschnitten wird, zeitgleich zum Abschälen der äußeren Schale. Ein zentraler Ausstoßstempel 25.1 wird, wie in Figur 2 gezeigt, von dem Schneidzylinder 30 konzentrisch umschlossen und entfernt den geschnittenen Ananaskern aus dem Schneidzylinder 30 in der Ruhe- oder Ausganglage bzw. beim Rückziehen der Schneidevorrichtung 1 mittels der Vortriebseinheit 23.

Das Schneidelement 3 ist konisch ausgebildet und weitet sich in Richtung des Kopfelements 2. Diese umlaufende Flanke ist als glatte Spreizfläche 11 ausgebildet. Der unterste Rand bildet die kranz- oder ringförmige Schneidkante 10. Weiterhin sind zwei flügelartige Sekundärmesser 7 vorgesehen, die im Bereich der Spreizfläche 11 gegenüberliegend angeordnet sind und radial nach außen abstehen.

In der Figur 2 ist ein Ausschnitt der Schäl- und Entkernungsvorrichtung 20 dargestellt, die eine Halte- und Tragstruktur 21 und eine Vortriebseinheit 23 umfasst, die an zwei säulenartigen Linearführungen 24, 26 verfahrbar ist. Die Linearführungen 24, 26 mit der Vortriebeinheit 23 sind auf einem zweiarmigen Schwenk- und Tragelement 27 angeordnet, das um eine Vertikalachse 28 schwenkbar ist.

Die Vortriebseinheit 23 ist in der Ausgangs- oder Ruhestellung oberhalb einer Ananas A dargestellt, wobei die Ausstoßstempel 25 mit ihrer Längserstreckung L durch das Schneidelement 3 und den nicht dargestellten, zentralen Schneidzylinder 30 hindurch ragen. Die lineare Verfahrrichtung der Schneidevorrichtung 1 ist mit dem Doppelpfeil angedeutet.

Die symbolisch dargestellte Ananas A wird in einer konisch als Vertiefung ausgeführten Halte- und Positionierungseinheit 22 zentriert gehalten.

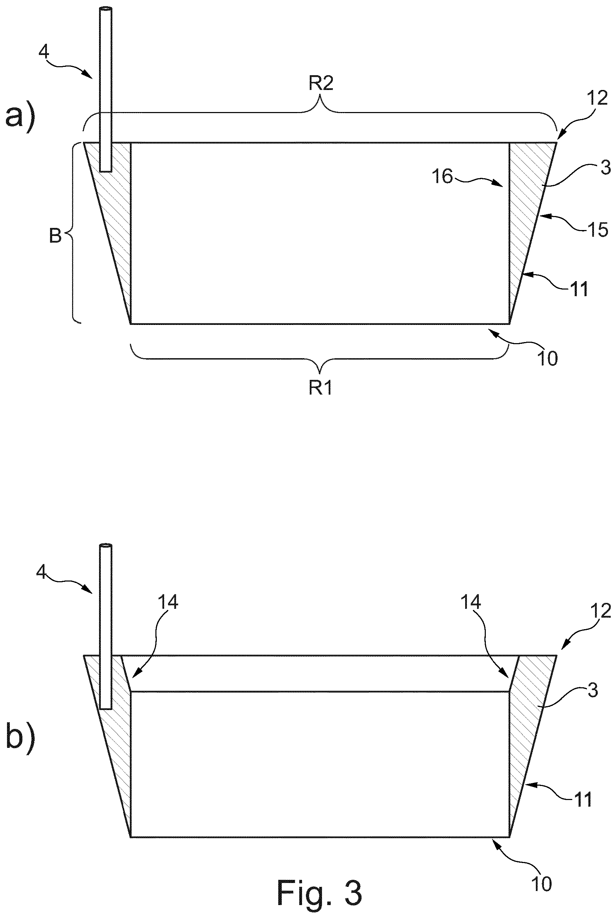

Die Figuren 3a), 3b) und 4 zeigen den unteren Teil der Schneidevorrichtung 1, insbesondere das Schneidelement 3. Diese weist am unteren Schneidkranz 10 einen Messerschliff auf, insbesondere einen Wellenschliff. Der Schneidkranz 10 hat hierbei einen Durchmesser R1. Der Durchmesser R2 am oberen Abschlusskranz 12 ist um das 1,2-fache größer, so dass die Breite B der Spreizfläche 11 vorliegend 4 cm beträgt und mit der vertikalen inneren Oberfläche 16 einen Flankenwinkel 15 von ca. 14° einschließt. Die innere Oberfläche 16 ist vertikal, zylindrisch ausgebildet. Auf der linken, oberen Seite ist die stabförmige Verbindungsstruktur 4 mit einem Stab 4.1 angedeutet, die Aufnahme- und Verbindungselemente 6.1 und die Gegenaufnahmeelemente 6.2 sind nicht dargestellt.

Die Figur 3b) zeigt eine zur Figur 3a) vergleichbaren Aufbau, wobei innen am Abschlusskranz 12 des Schneidelementes 3 eine Schräge 14 angebracht ist, so dass eine umlaufende, konische Öffnungsfläche gebildet ist. Diese verbessert den Rückzug bzw. die Rückführung des Schneidelementes 3 in die Ausgangs- und Ruhestellung nach dem vollständigen Durchlaufen der Ananas A.

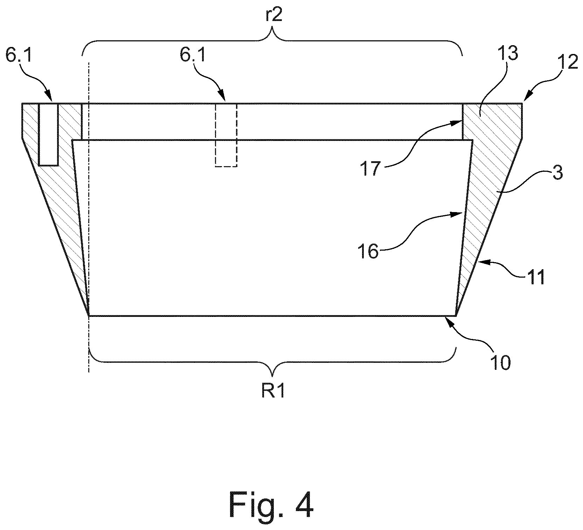

Das in der Figur 4 dargestellte Schneidelement 3 weist an der oberen Kante ein Ringelement 13 auf, wodurch die Festigkeit erhöht wird und die Anordnung der Aufnahme- und Befestigungselemente 6.1 verbessert wird. Der Radius R1 des Schneidkranzes 10 ist geringfügig kleiner als der innere Kranzradius r2, wie mit der strichpunktierten Linie angedeutet ist, so dass die geschnittene Ananas A an der inneren Kranzfläche 17 ohne Beschädigung vorbeigeführt werden kann.

In dem gezeigten Beispiel ist die innere Oberfläche 16 des Schneidelementes 3 bezüglich der Vertikalen geneigt, so dass die geschnittenen Flächen der Ananas nicht unmittelbar an der inneren Oberfläche 16 und natürlich auch nicht an der inneren Kranzfläche anliegen. Hierdurch wird die erforderliche Vortriebskraft der Vortriebseinheit 23 herabgesetzt.

Insgesamt ist es vorteilhaft, wenn ein nach innen kragendes Ring- oder Kranzelement am inneren Rand beziehungsweise an der inneren Kante eine Fase oder einen Radius aufweist, damit die Ananasfrucht auch im Falle einer Berührung leicht und beschädigungsfrei vorbeigleiten kann (nicht dargestellt).

### Bezugszeichenliste

- 1: Schneidevorrichtung
- 2: Kopfelement
- 3: Schneidelement
- 4: Verbindungsstruktur
- 4.1 - 4.4: Stäbe
- 5: Befestigungsmittel, -bolzen

- 6.1: Aufnahme- und Verbindungselement
- 6.2: Gegenaufnahmeelement

- 7: Sekundärmesser
- 8: Öffnung
- 9: Schraube
- 10: Schneidkranz
- 11: Spreizfläche
- 12: Abschlussrand oder -kranz
- 13: Ringelement, ein- oder mehrteilig
- 14: Schräge
- 15: Flankenwinkel
- 16: Oberfläche, innere
- 17: Kranzfläche, innere

- 20: Schäl- und Entkernungsvorrichtung
- 21: Halte- und Tragstruktur
- 22: Halte- und Positionierungseinheit
- 23: Vortriebseinheit
- 24: Linearführung
- 25: Ausstoßstempel
- 25.1: Ausstoßstempel, zentraler
- 26: Linearführung
- 27: Schwenk- und Tragelement
- 28: Vertikalachse

- 30: Schneidzylinder
- A: Ananas
- B: Breite

- R1: Schneidkranzradius (R1)
- R2: Kranzradius (R2), außen
- r2: Kranzradius, innen

## Patentansprüche

1. Schneidevorrichtung (1) zum Schälen und zur Kernentfernung einer Ananasfrucht (A), umfassend ein Kopfelement (2), ein ring- oder kranzförmiges Schneidelement (3) mit einem ein- oder mehrteiligen Schneidkranz (10), mindestens eine das Kopfelement (2) und das Schneidelement (3) verbindende Verbindungsstruktur (4), und wobei das Kopfelement (2) mindestens ein Befestigungsmittel (5) umfasst, mittels welchem das Kopfelement (2) an einer Vortriebseinheit (23) befestigt werden kann, wobei weiterhin am Kopfelement (2) ein zentraler, lösbarer Schneidzylinder (30) angeordnet ist, welcher von der Verbindungsstruktur (4) und dem Schneidelement (3) konzentrisch umschlossen wird, das Kopfelement (2) und das Schneidelement (3) jeweils mindestens ein Aufnahme- und Verbindungselement (6.1) umfassen, an oder mittels welchen die Verbindungsstruktur (4) lösbar befestigt ist, und wobei an der Verbindungsstruktur (4) das zugehörige, komplementäre Gegenaufnahmeelement (6.2) zum Aufnahme- und Verbindungselement (6.1) angeordnet oder angeformt ist, **dadurch gekennzeichnet, dass** das Schneidelement (3) einen Abschlussrand oder -kranz (12) aufweist, in dem das Aufnahme- und Verbindungselement (6.1) angeordnet ist.

2. Schneidevorrichtung (1) nach Anspruch 1, **dadurch gekennzeichnet, dass** das mindestens eine Aufnahme- und Verbindungselement (6.1) ein Schraubelement ist oder als Bajonettverschluss ausgebildet ist.

3. Schneidevorrichtung (1) nach einem der Ansprüche 1 oder 2, **dadurch gekennzeichnet, dass** das mindestens ein Aufnahme- und Verbindungselement (6.1) als eine Schwenk- oder Drehlagerstelle ausgebildet ist.

4. Schneidevorrichtung (1) nach einem der vorherigen Ansprüche, **dadurch gekennzeichnet, dass** die Verbindungsstruktur (4) als eine offene Stab- oder Gitterstruktur ausgebildet ist.

5. Schneidevorrichtung (1) nach einem der vorherigen Ansprüche, **dadurch gekennzeichnet, dass** die Verbindungsstruktur (4) als mindestens zwei parallele Stäbe (4.1 - 4.4) ausgebildet ist.

6. Schneidevorrichtung (1) nach Anspruch 5, **dadurch gekennzeichnet, dass** die parallelen Stäbe (4.1-4.4) an mindestens einem Ende als Gegenaufnahmeelement (6.2) ein Gewinde aufweisen, und wobei das Kopfelement (2) oder das Schneidelement (3) mindestens ein entsprechendes Gegengewinde als Aufnahme- und Verbindungselement (6.1) aufweist.

7. Schneidevorrichtung (1) nach einem der vorherigen Ansprüche, **dadurch gekennzeichnet, dass** das Schneidelement (3) einen unteren Schneidkranz (10) mit einem Schneidkranzradius (R1) und einen oberen Abschlussrand oder -kranz (12) mit einem äußeren Kranzradius (R2) umfasst, wobei der Schneidkranzradius (R1) kleiner ist als der Kranzradius (R2).

8. Schneidevorrichtung (1) nach Anspruch 7, **dadurch gekennzeichnet, dass** das Schneidelement (3) zwischen dem Schneidkranz (10) und dem Abschlusskranz (12) eine ein- oder mehrteilige umlaufende, konische Spreizfläche (11) aufweist.

9. Schneidevorrichtung (1) nach Anspruch 8, **dadurch gekennzeichnet, dass** die Spreizfläche (11) eine Breite (B) von 2cm bis 6 cm aufweist, vorteilhafterweise 3,5 cm bis 4,5 cm.

10. Schneidevorrichtung (1) nach einem der Ansprüche 7 bis 9, **dadurch gekennzeichnet, dass** der obere Abschlusskranz (12) ein nach innen kragendes ein- oder mehrteiliges Ringelement (13) aufweist, wobei der innere, freie Radius (r2) des Ringelements (13) gleich oder größer ist als der Schneidkranzradius (R1).

11. Schäl- und Entkernungsvorrichtung (20) für eine Ananasfrucht (A), umfassend eine Halte- und Tragstruktur (21), eine Halte- und Positionierungseinheit (22) für eine Ananasfrucht (A) und mindestens eine dieser gegenüber angeordnete und an einer Vortriebseinheit (23) gehaltene und geführte Schneidevorrichtung (1), wobei die Schneidevorrichtung (1) mittels der Vortriebseinheit (23) von einer Anfangs- oder Ruhelage in eine End- oder Arbeitslage verfahrbar ist, **dadurch gekennzeichnet, dass** die Schneidevorrichtung (1) nach einem der Ansprüche 1 bis 10 ausgebildet ist.

12. Schäl- und Entkernungsvorrichtung (20) nach Anspruch 11, **dadurch gekennzeichnet, dass** die Vortriebseinheit (23) eine lineare Vortriebseinheit (23) ist, insbesondere eine streng lineare Vortriebseinheit, bei welcher die Schneidevorrichtung (1) nicht in Rotation oder Drehung versetzt wird.

13. Schäl- und Entkernungsvorrichtung (20) nach Anspruch 11 oder 12, **dadurch gekennzeichnet, dass** mindestens ein stationärer Ausstoßstempel (25) vorgesehen ist, der in seiner Längserstreckung (L) parallel zur Vortriebsrichtung der Vortriebseinheit (23) ausgerichtet ist und in der Anfangs- oder Ruhelage der Schneidevorrichtung (1) durch eine Öffnung im Kopfelement (2) in Richtung des Schneidelements (3) beziehungsweise des Schneidkranzes (10) ragt, insbesondere sich in seiner Längserstreckung (L) bis zum Schneidelement (3) und idealerweise bis zum Schneidkranz (10) erstreckt.

14. Schäl- und Entkernungsvorrichtung (20) nach Anspruch 13, **dadurch gekennzeichnet, dass** ein zentraler Ausstoßstempel (25.1) vorgesehen ist, welcher in der Anfangs- oder Ruhelage der Schneidevorrichtung (3) von einem zentralen Schneidzylinder (30) konzentrisch umschlossen wird.

## Claims

1. Cutting device (1) for peeling and removing the core of a pineapple fruit (A), comprising a head element (2), a ringshaped or annular-shaped cutting element (3) having a single-component or multi-component cutting ring (10), at least one connecting structure (4) connecting the head element (2) and the cutting element (3), and wherein the head element (2) comprises at least one fastening element (5), by means of which the head element (2) can be fastened to a drive unit (23), wherein furthermore a central, detachable cutting cylinder (30) is arranged on the head element (2), which is concentrically enclosed by the connecting structure (4) and the cutting element (3), the head element (2) and the cutting element (3) each comprise at least one receiving and connecting element (6.1), to or by means of which the connecting structure (4) is detachably fastened, and wherein the corresponding, complementary counter-receiving element (6.2) to the receiving and connecting element (6.1) is arranged or formed on the connecting structure (4), **characterized in that** the cutting element (3) comprises a terminating edge or ring (12), in which the receiving and connecting element (6.1) is arranged.

2. Cutting device (1) according to Claim 1, **characterized in that** the at least one receiving and connecting element (6.1) is a screw element or is configured as a bayonet socket.

3. Cutting device (1) according to any one of the Claims 1 or 2, **characterized in that** the at least one receiving and connecting element (6.1) is configured as a pivot or pivot bearing point.

4. Cutting device (1) according to any of the preceding Claims, **characterized in that** the connecting structure (4) is configured as an open rod or grid structure.

5. Cutting device (1) according to any of the preceding Claims, **characterized in that** the connecting structure (4) is configured as at least two parallel rods (4.1 - 4.4).

6. Cutting device (1) according to Claim 5, **characterized in that** the parallel rods (4.1-4.4) comprise a thread at at least one end as a mating receiving element (6.2), and wherein the head element (2) or the cutting element (3) comprises at least one corresponding mating thread as a receiving and connecting element (6.1).

7. Cutting device (1) according to any of the preceding Claims, **characterized in that** the cutting element (3) comprises a lower cutting ring (10) having a cutting ring radius (R1) and an upper terminating edge or ring (12) having an outer ring radius (R2), wherein the cutting ring radius (R1) is smaller than the ring radius (R2).

8. Cutting device (1) according to Claim 7, **characterized in that** the cutting element (3) comprises a single component or multi-component circumferential, conical expanding surface (11) between the cutting ring (10) and the terminating ring (12).

9. Cutting device (1) according to Claim 8, **characterized in that** the expanding surface (11) comprises a width (B) of 2 cm to 6 cm, advantageously 3.5 cm to 4.5 cm.

10. Cutting device (1) according to any of the Claims 7 to 9, **characterized in that** the upper terminating ring (12) comprises an inwardly projecting single-component or multi-component ring element (13), the inner, free radius (r2) of the ring element (13) being equal to or greater than the cutting ring radius (R1).

11. Peeling and coring device (20) for a pineapple fruit (A), comprising a holding and supporting structure (21), a holding and positioning unit (22) for a pineapple fruit (A) and at least one cutting device (1) arranged opposite the latter and held and guided on a drive unit (23), wherein the cutting device (1) can be moved by means of the drive unit (23) from an initial or resting position into a final or working position, **characterized in that** the cutting device (1) is configured according to any one of the Claims 1 to 10.

12. Peeling and coring device (20) according to Claim 11, **characterized in that** the drive unit (23) is a linear drive unit (23), in particular a strictly linear drive unit, wherein the cutting device (1) is not rotated or turned.

13. Peeling and coring device (20) according to Claim 11 or 12, **characterized in that** at least one stationary ejection punch (25) is provided, which is aligned parallel to the advancing direction of the drive unit (23) in its longitudinal direction (L) and, in the initial or resting position of the cutting device (1), projects through an opening in the head element (2) in the direction of the cutting element (3) or the cutting ring (10), in particular extending in its longitudinal direction (L) up to the cutting element (3) and ideally up to the cutting ring (10).

14. Peeling and coring device (20) according to Claim 13, **characterized in that** a central ejection punch (25.1) is provided, which is concentrically enclosed by a central cutting cylinder (30) in the initial or resting position of the cutting device (3).

## Revendications

1. Dispositif de coupe (1) pour éplucher et pour retirer le cylindre central d'un ananas (A), comprenant un élément de tête (2), un élément de coupe en forme d'anneau ou de couronne (3) avec une couronne de coupe (10) en une ou plusieurs parties, au moins une structure de jonction (4) reliant l'élément de tête (2) et l'élément de coupe (3) et dans lequel l'élément de tête (2) comprend au moins un moyen de fixation (5) à l'aide duquel l'élément de tête (2) peut être fixé à une unité de préimpulsion (23), un cylindre de coupe amovible central (30) étant en outre disposé au niveau de l'élément de tête (2), ledit cylindre étant ceint concentriquement par la structure de jonction (4) et l'élément de coupe (3), l'élément de tête (2) et l'élément de coupe (3) comprenant respectivement au moins un élément de jonction et de réception (6.1) au niveau duquel ou à l'aide duquel la structure de jonction (4) est fixée de façon amovible et le contre-élément de réception (6.2) complémentaire associé par rapport à l'élément de jonction et de réception (6.1) est disposé ou formé au niveau de la structure de jonction (4), **caractérisé en ce que** : l'élément de coupe (3) comportant une couronne ou bord terminal (12) au niveau de laquelle ou duquel l'élément de jonction et de réception (6.1) est disposé.

2. Dispositif de coupe (1) selon la revendication 1, **caractérisé en ce que** l'au moins un élément de jonction et de réception (6.1) est un élément vissé ou est réalisé sous la forme d'une fermeture à baïonnette.

3. Dispositif de coupe (1) selon l'une quelconque des revendications 1 ou 2, **caractérisé en ce que** l'au moins un élément de jonction et de réception (6.1) est réalisé sous la forme d'un point d'appui pivotant ou tournant.

4. Dispositif de coupe (1) selon l'une quelconque des revendications précédentes, **caractérisé en ce que** la structure de jonction (4) est réalisée sous la forme d'une structure à barres ou à grillage ouverte.

5. Dispositif de coupe (1) selon l'une quelconque des revendications précédentes, **caractérisé en ce que** la structure de jonction (4) est réalisée sous la forme d'au moins deux barres (4.1 - 4.4) parallèles.

6. Dispositif de coupe (1) selon la revendication 5, **caractérisé en ce que** les barres parallèles (4.1-4.4) comportent au niveau d'au moins une extrémité un filet servant de contre-élément de réception (6.2) et l'élément de tête (2) ou l'élément de coupe (3) comporte au moins un contre-filet correspondant réalisé sous la forme d'un élément de jonction et de réception (6.1).

7. Dispositif de coupe (1) selon l'une quelconque des revendications précédentes, **caractérisé en ce que** l'élément de coupe (3) comprend une couronne de coupe (10) inférieure avec un rayon de couronne de coupe (R1) et une couronne ou bord terminal (12) supérieur avec un rayon de couronne (R2) extérieur, le rayon de couronne de coupe (R1) étant inférieur au rayon de couronne (R2).

8. Dispositif de coupe (1) selon la revendication 7, **caractérisé en ce que** l'élément de coupe (3) prévu entre la couronne de coupe (10) et la couronne terminale (12) comporte une surface extensible (11) périphérique en une ou plusieurs parties.

9. Dispositif de coupe (1) selon la revendication 8, **caractérisé en ce que** la surface extensible (11) présente une largeur (B) de 2 cm à 6 cm, de façon avantageuse de 3,5 cm à 4,5 cm.

10. Dispositif de coupe (1) selon l'une quelconque des revendications 7 à 9, **caractérisé en ce que** la couronne terminale supérieure (12) comporte un élément annulaire (13) en une ou plusieurs parties doté d'un collet vers l'intérieur, le rayon libre intérieur (r2) de l'élément annulaire (13) étant supérieur ou égal au rayon de couronne de coupe (R1).

11. Dispositif d'épluchage et de retrait de cylindre central (20) pour un ananas (A), comprenant une structure d'arrêt et de support (21), une unité d'arrêt et de positionnement (22) pour un ananas (A) et au moins un dispositif de coupe (1) disposé en vis-à-vis et maintenu et guidé au niveau d'une unité de préimpulsion (23), le dispositif de coupe (1) pouvant être déplacé à l'aide de l'unité de préimpulsion (23) depuis une position initiale ou position de repos jusque dans une position terminale ou position de travail, **caractérisé en ce que** :
le dispositif de coupe (1) est réalisé selon l'une quelconque des revendications 1 à 10.

12. Dispositif d'épluchage et de retrait de cylindre central (20) selon la revendication 11, **caractérisé en ce que** l'unité de préimpulsion (23) est une unité de préimpulsion (23) linéaire, notamment une unité de préimpulsion strictement linéaire dans laquelle le dispositif de coupe (1) n'est pas déplacé en rotation ou en pivotement.

13. Dispositif d'épluchage et de retrait de cylindre central (20) selon la revendication 11 ou 12, **caractérisé en ce qu'**au moins un tampon de butée stationnaire (25) est prévu qui est orienté dans son extension longitudinale (L) parallèlement à la direction de préimpulsion de l'unité de préimpulsion (23) et qui ressort dans la position initiale ou position de repos du dispositif de coupe (1) à travers une ouverture pratiquée dans l'élément de tête (2) en direction de l'élément de coupe (3) et/ou de la couronne de coupe (10), et s'étend notamment dans son extension longitudinale (L) jusqu'à l'élément de coupe (3) et idéalement jusqu'à la couronne de coupe (10).

14. Dispositif d'épluchage et de retrait de cylindre central (20) selon la revendication 13, **caractérisé en ce qu'**un tampon de butée central (25.1) est prévu qui est ceint concentriquement par un cylindre de coupe (30) central dans la position initiale ou position de repos du dispositif de coupe (3).
